# EUROPEAN PATENT SPECIFICATION

(11) **EP 3 892 899 B1**
(45) Date of publication and mention of the grant of the patent: **23.08.2023**
(21) Application number: 20196224.8
(22) Date of filing: 15.09.2020
(51) Int. Cl.: F16K 27/02, F16K 31/06, F16K 27/00, F16K 1/42

(54) **A VALVE FOR A FLUID PUMP**
VENTIL FÜR EINE FLÜSSIGKEITSPUMPE
SOUPAPE POUR UNE POMPE À FLUIDE

(30) Priority: 07.04.2020 HK 20205407
(43) Date of publication of application: 13.10.2021
(73) Proprietor: ODE (HK) Company Limited, Chai Wan (HK)
(72) Inventor: HO, Man Ting, Hong Kong (HK)
(74) Representative: FRKelly

(56) References cited:
- WO-A1-2011/073924
- WO-A1-2012/038897
- CN-A- 107 366 773
- CN-U- 203 335 988
- IT-A1- UA20 164 402
- US-A1- 2005 104 301

## Description

### Technical Field

The present invention relates to valves for fluid pumps and in particular, fluid valves for home appliances such as coffee machines, beverage vending machines and the like.

### Background of the Invention

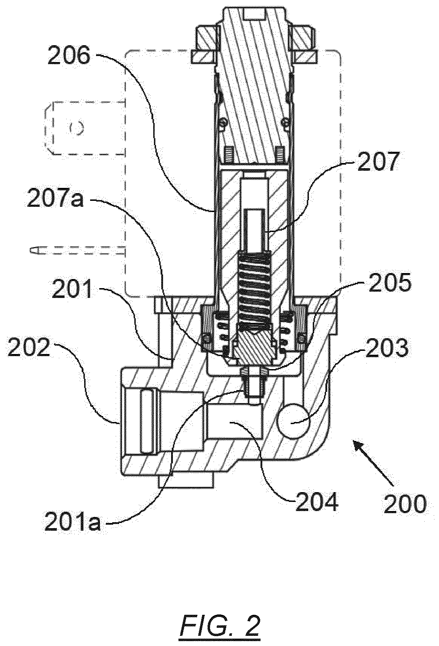

Fluid valves are utilised in a range of applications including for instance coffee machines for delivering hot water, milk and the like from various inlets to corresponding outlets in the machine. Certain, existing valves are unsuitable for use in such applications involving contact with food/liquids for human consumption due to the amount of lead-content in the machined forged brass parts of the existing valves. Additionally, whilst other existing valves have sought to reduce the amount of lead-content in the overall valve, the assembly of such valves tend to compromise the accuracy and reliability of the seal formed over the valve orifice to close the valve. Patent documents WO2012038897A1, US20050104301A1 and CN107366773A (disclosing a valve according to the preamble of independent claim 10) are considered to be of some relevance to the present invention. An existing valve according to the preamble of independent claim 1 is shown in figure 2 of the present application.

### Summary of the Invention

The present invention seeks to alleviate at least one of the above-described problems.

The present invention may involve several broad forms. Embodiments of the present invention may include one or any combination of the different broad forms herein described.

In one broad form, the present invention provides a valve for use with a fluid pump, as defined by independent claim 1 and including:
a valve body having an inlet and an outlet, said inlet being configured for fluid communication with the outlet via a fluid passage disposed between the inlet and the outlet;
a valve orifice member is disposed within the valve body and forms a portion of the fluid passage disposed between the inlet and the outlet;
a tubular section having a first end configured for rigid attachment to the valve body;
a plunger configured for controlled movement within the tubular section in response to at least one control signal received from a control module between at least one of a first position wherein a mating surface of the plunger is configured to sealingly engage with an orifice of the valve orifice member so as to block flow of fluid from the inlet to the outlet via the fluid passage, and a second position wherein the mating surface of the plunger is configured to not sealingly engage with the orifice of the valve orifice member so as to not block fluid flow from the inlet to the outlet via the fluid passage; and
wherein said valve orifice member is separately formed from the valve body and configured to be inserted within the valve body, and, wherein the first end of the tubular section is configured to press against the valve orifice member within the valve body so as to secure the valve orifice member in place within the valve body when the tubular section is rigidly attached to the valve body.

Preferably, at least one of the valve orifice member and the valve body may include a molded polymeric material. Also preferably, at least one of the valve orifice member and the valve body may be formed from an injection molded polymeric material. Also preferably, the polymeric material may include at least one of polyphthalamide (PPA), Polyphenylene Sulfide (PPS) and a Nylon^{™} type material.

Preferably, the tubular section may be rigidly attached to the valve body by a bracket configured for surrounding a periphery of the tubular section and being secured to an outer surface of the valve body, and wherein, the bracket may be shaped to prevent detachment of the tubular section from the valve body when the bracket is secured to the outer surface of the valve body.

Preferably, the bracket may be configured to be secured to the outer surface of the valve body by screwing the bracket to the outer surface of the valve body.

Preferably, an o-ring may be disposed between the valve orifice member and the first end of the tubular section, and, a second o-ring may be disposed between the valve orifice member and the valve body.

Preferably, the plunger may include an armature of a solenoid actuator that may be configured for movement relative to a solenoid coil within the tubular section between the first and second positions in response to the solenoid coil being energised by at least one control signal received from the control module.

Preferably, the present invention may include a biasing element configured for biasing the plunger in to at least one of the first and the second positions.

In another broad form, the present invention provides a valve for use with a fluid pump, as defined by independent claim 10 and including:
a valve body having a plurality of inlets and at least one outlet, said plurality of inlets being configured for fluid communication with the corresponding at least one outlets via respective fluid passages disposed between the inlets and the at least one corresponding outlet;
a plurality of valve orifice members disposed within the valve body and forming portions of the respective fluid passages disposed between the inlets and the at least one corresponding outlet;
a plurality of tubular sections having first ends configured for rigid attachment to the valve body;
a plurality of plungers configured for controlled movement within the respective tubular sections in response to at least one control signal received from a control module between at least one of a first position wherein mating surfaces of the plungers are configured to sealingly engage with orifices of the respective valve orifice members so as to block flow of fluid from the inlets to the respective at least one outlet via the respective fluid passages, and a second position wherein the mating surfaces of the plungers are configured to not sealingly engage with the orifices of the respective valve orifice members so as to not block fluid flow from the inlets to the at least one respective outlet via the respective fluid passages; and
wherein said valve orifice members are separately formed from the valve body and configured to be inserted within the valve body, and, wherein the first ends of the tubular sections are configured to press against the respective valve orifice members within the valve body so as to secure the respective valve orifice members in place within the valve body when the respective tubular sections are rigidly attached to the valve body.

Preferably, the valve body of the valve may include an integrally formed valve body. Also preferably, the integrally formed valve body may include a single-piece injection molded body.

Alternately, the valve body may comprise a plurality of separately formed valve bodies that are connected together.

### Brief Description of the Drawings

The present invention will become more fully understood from the following detailed description of a preferred but non-limiting embodiments thereof, described in connection with the accompanying drawings, wherein:
**Figure 1** shows a cross-sectional view of an existing valve in which the valve orifice member is integrally formed together within the valve body as a single piece by machining forged brass;
**Figure 2** shows a cross-sectional view of another existing valve in which a metallic valve orifice member is formed separately from a valve body and secured within the valve body by way of screw-threaded or press-fitting engagement;
**Figure 3** shows a cross-sectional view of valve in accordance with an embodiment of the present invention in which the valve orifice member includes an injection molded polymeric material that is injection molded separately from an injection molded valve body, and secured within the valve body by a tubular section pressing the valve orifice member against the valve body;
**Figures 4A, 4B and 4C****,** show a perspective view, a top view and a side cut-away view respectively of an injection molded polymeric valve orifice member formed separately from the injection molded valve body in accordance with the embodiment of the present invention;
**Figure 5** shows an exploded perspective view of a multiple-valve device in accordance with another embodiment of the present invention in which multiple valve orifice members are injection molded separately from the valve body before being assembled with the valve body;
**Figure** 6 shows a perspective view of the multiple-valve of Fig. 5 in assembled form and with the housing mounted around the tubular section;
**Figure** 7 shows another aspect of the valve of Fig. 6 in accordance with an embodiment of the present invention in assembled form and without the control housing mounted around the tubular section;
**Figure 8** shows an exploded view of a solenoid coil, bobbin and electrical terminals for use in accordance with an embodiment of the present invention; and
**Figure 9** shows an assembled view of the solenoid coil, bobbin and electrical terminals of Fig. 8 for use in accordance with an embodiment of the present invention.

### Detailed Description of the Preferred Embodiments

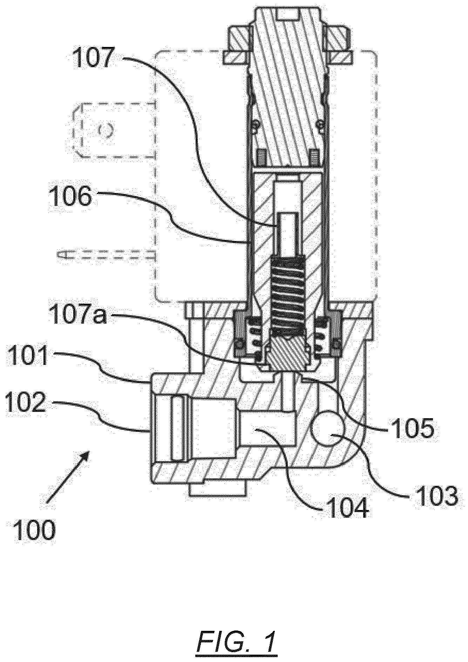

Figure 1 shows one example (100) of an existing valve technology for use with a fluid pump. The valve comprises a valve body (101) having an inlet (102), an outlet (103), and a fluid passage (104) to provide fluid communication from the inlet (102) and outlet (103). A valve orifice member (105) is disposed within the valve body (101) which forms a portion of the fluid passage (104) disposed between the inlet (102) and the outlet (103). A tubular section (106) extends from the valve body (101) and a plunger (107) is configured for movement within the tubular section (106) between a first position in which a mating surface (107a) of the plunger (107) is sealingly engages with an orifice of the valve orifice member (108) so as to block flow of fluid from the inlet (102) to the outlet (103) via the fluid passage (104), and, a second position in which the mating surface (107a) of the plunger (107) does not sealingly engage with the orifice of the valve orifice member (105) so as to not block fluid flow from the inlet (102) to the outlet (103) via the fluid passage. In this existing technology, the valve body (101) and the valve orifice member (105) are integrally formed as a single piece device by machining forged brass in to the required shape and dimensions. Such existing valves are considered to be disadvantageous in that forged brass is a relatively expensive material, and, additional manufacturing time and labour is incurred in having to machine the forged brass in to the required shape. Further, due to the amount of lead content typically present in the forged brass material comprising the valve, such existing valves are not considered to be suitable for use in applications involving contact with foods/liquids for human consumption (e.g. in coffee machines). Yet further, there is also greater tendency for wastage and increased manufacturing costs when such existing valves are manufactured because if defects arise in the valve orifice member, this will render the entire valve unfit for purpose, and the entire valve will need to be rejected due to the valve body and valve orifice member being formed as a large single-piece.

In seeking to address the above disadvantages with single-piece machined brass forged valves, other existing valve technologies have been developed. For instance, Fig. 2 shows a valve (200) having a valve body (201) and a valve orifice member (205) that are formed separately from one another before then being assembled together. In this example, the valve body (201) is formed from an injection molded polymeric material whilst the valve orifice member (205) is formed from a metallic material (due to the relative high-quality finish and lower defects in the orifice surface) which is then screwed or pressed fitted in to securement within the valve body (201). This arrangement tends to be more cost-effective than the above-described single-piece brass valves as it is not necessary to dispose of the entire valve if the valve orifice member (205) has too many defects. However, such valves also suffer from several disadvantages. For instance, screwing or press-fitting the metallic valve orifice member (205) in to position within the valve body (201) has to be performed with a relatively high degree of precision in order for the mating surface of the plunger to seal the orifice accurately and reliably, and this increases assembly complexity, time and labour. Forming screw threads in to the plastic valve body (201) and the valve orifice member for securement together also complicates the injection molding design and manufacturing process. Yet further, such screw threads (201a) formed in the injection molded valve body (201) may tend to wear out over time when engaged with the metal threads on the metallic valve orifice member (205) such that the valve orifice member (205) may not sit securely within the valve body (201) and may not effect accurate and reliable sealing with the mating surface (207a) of the plunger (207) moving with the tubular section (206) of the valve (200). Yet further, the requisite degree of precision in fitting the metallic valve orifice member (205) to the valve body (201) may be further compromised due to thermo-expansion of the polymeric valve body (201) when exposed to heat (e.g. hot water running through a coffee machine). In some cases, thermo-expansion of the polymeric valve body (201) may result in a press-fitted valve orifice member being ejected from engagement with the valve body (201). Yet further, in such valves, as the valve orifice member (205) is a metallic material, this still incurs time and cost in machining the part to the necessary shape, dimensions with requisite precision.

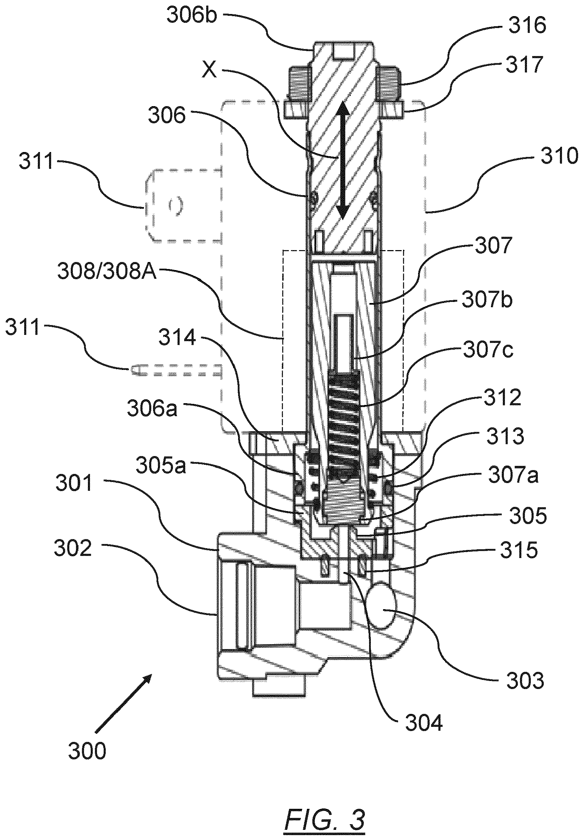

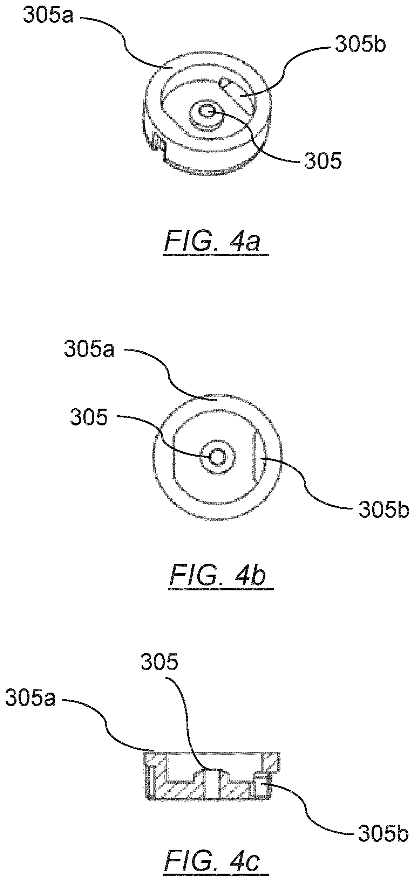

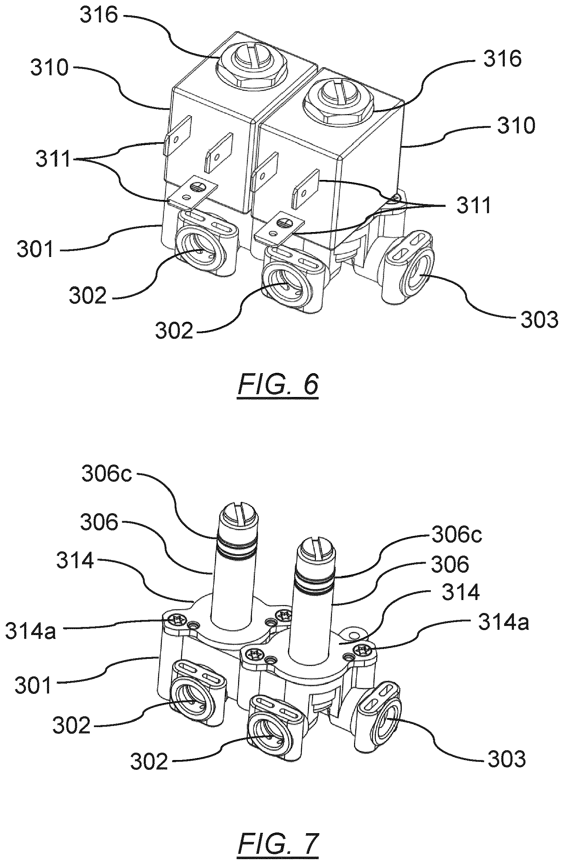

Preferred embodiments of the present invention will now be described herein with reference to Figs. 3 to 9. The embodiments are directed towards a novel valve for a fluid pump. Referring firstly to Fig. 3, an embodiment (300) of the valve is shown which comprises a valve body (301) having an inlet (302), an outlet (303), and a fluid passage (304) to provide fluid communication between the inlet (302) and outlet (303). A valve orifice member (305) is disposed within the valve body (302) having an orifice which forms a portion of the fluid passage (304) disposed between the inlet (302) and the outlet (303).

A tubular section (306) extends from the valve body (301) and a plunger (307) is configured for reciprocal movement within the tubular section (306) between a first position in which a mating surface (307a) of the plunger (307) sealingly engages with the orifice of the valve orifice member (305) so as to block flow of fluid from the inlet (302) to the outlet (303) via the fluid passage (304), and, a second position in which the mating surface (307a) of the plunger (307) does not sealingly engage with the orifice of the valve orifice member (305) so as to not block fluid flow from the inlet (302) to the outlet (303) via the fluid passage (304). An inner spring (307c) is configured for compression and expansion movement along hollow elongate core of the plunger (307) as shown in Fig. 3. An inner brass tube loaded (307c) within the hollow core of the plunger (307) provides support and guidance for the inner spring (307c) as it expands and compresses. The mating surface (307a) of the plunger (307) is rigidly mounted on the end of the inner spring (307c) so that when the mating surface (307a) sealing engages with the valve orifice member (305) the inner spring (307c) assists in dampening the shock of impact upon closure of the mating surface (307a) against the valve orifice member (305).

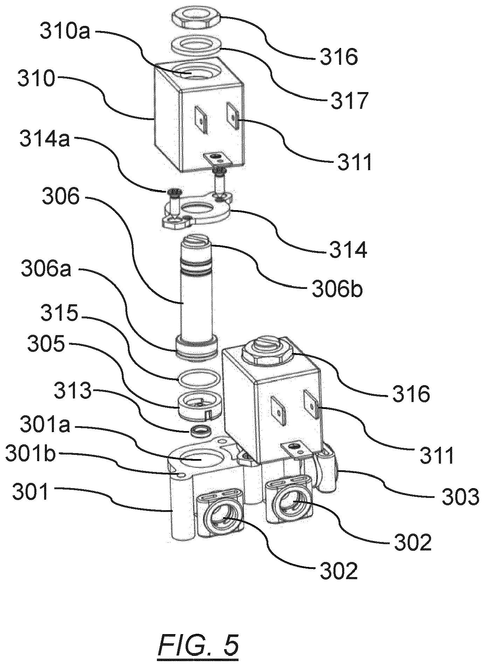

The tubular section (306) may typically be formed from a steel, brass or rigid polymeric material of suitable thickness. The tubular section (306) has very low or negligible magnetic properties and acts as guide for linear movement of the plunger (307) therein upwardly and downwardly along the axis (X) shown in Fig. 3. As shown in Fig. 5, a housing (310) is configured for fitting around the tubular section (306). The housing (310) includes openings (310a) disposed in its top and bottom walls which complement the cross-sectional shape of the tubular section (306) so that it may be neatly and snugly slid over the cross-sectional shape of the tubular section until the bottom wall of the housing (310) is resting atop against the steel bracket (314). The housing (310) is rigidly secured relative to the tubular section (306) after the housing (310) has been fitted around the tubular section by attaching a screw (216) and washer (217) to an end (306b) of the tubular section (306) protruding outwardly of the top wall of the housing (310) so that the screw (216) and washer (217) abut against the top wall of the housing (310) thus preventing it's removal.

Also in this embodiment, the plunger (307) includes an armature of a solenoid actuator that is configured for movement relative to a solenoid coil (308) disposed on a bobbin (308a) within the housing (310) between the first and second positions in response to the solenoid coil (308) being energised by an electrical control signal received from a control module. As shown in Fig. 3 the solenoid coil (308) and bobbin (308a) fit around the tubular section (306) and hence around the plunger (307). In this embodiment, the control module may comprise control switching circuitry (not shown) which may controllably switch power to the solenoid coil (308) from a power supply to energise the coil when switched on. A biasing spring (312) is also located within the tubular section (306) and is configured for biasing the plunger (307) in to the first position whereby the plunger mating surface (307a) is sealing engaged with the valve orifice member (305). When the control module generates an electrical control signal which energises the solenoid coil (308), the armature plunger (307) is caused to move from the first position upwardly along the tubular section (306) towards the end (306b) in to the second position so that the plunger mating surface (307a) no longer sealingly engages with the valve orifice member (205) and fluid is able to flow from the inlet (302) towards the outlet (303) via the fluid passage (304). When unsealed, fluid is able to flow along a path from the inlet (302) through the fluid passage (304), through the valve orifice member (305), through a flow opening (305b) in the valve orifice member (305) and to the outlet (303).

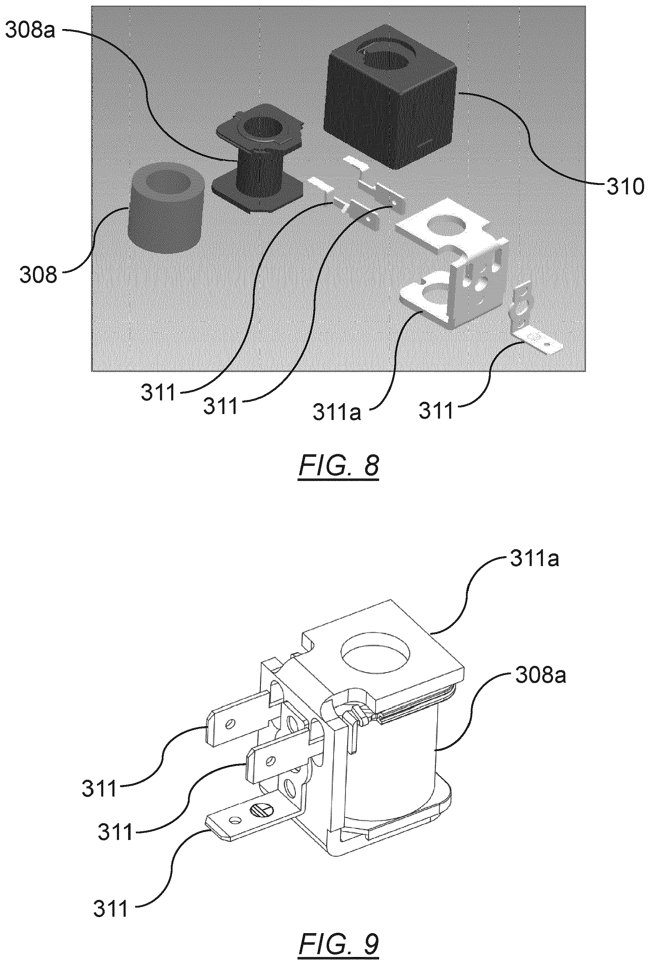

In this embodiment the control module is located externally of the valve although in alternate embodiments, it is possible that the control module may be integrally formed with the valve and may for instance be located within the housing (310). The solenoid coil (308) ends may be spot soldered to electrical terminals (311) which in turn allow electrical interfacing with the control module switching circuitry external of the valve. As shown in Figs. 8 and 9, the electrical terminals (311) are mounted on a C-shaped electrical terminal frame (311a) that fits around top and bottom ends of the solenoid coil (308) bobbin (308a). The C-Shaped electrical terminal frame (311a) also includes apertures disposed in its end portions that are adapted for sliding over the cross-sectional shape of the tubular section (306).

In this embodiment, the valve body (301) and the valve orifice member (305) are each formed separately from injection molded polymeric materials such as polyphthalamide (PPA), Polyphenylene Sulfide (PPS) or Nylon^{™} type material and are then assembled together by inserting the valve orifice member (305) into a recess (301a) of the valve body (301). An o-ring (313) is positioned between the valve orifice member (305) and the valve body (301). A first end (306a) of the tubular section (306) is configured to press downwardly against the sides (305a) of the valve orifice member (305) via another intermediary positioned o-ring (315) when the valve orifice member (305) has been inserted in to the valve body (301) recess (301a). The tubular section (306) is secured to the valve body (301) by a steel bracket (314) which is configured to be fitted around the outer periphery of the tubular section (306) and which can be screwed into engagement with an outer top surface (301b) of the valve body (301) by a plurality of screws (314a). The bracket (314) is suitably shaped to prevent detachment of the tubular section (306) from the valve body (301) when the bracket (314) is screwed to the outer surface of the valve body (301), and in turn, the tubular section pressing downwardly against the valve orifice member (305) via the intermediately positioned o-ring (315) secures the valve orifice member (305) in place within the valve body (301). In certain embodiments, the bracket (314) may be formed from a non-metallic material, however, a steel bracket is used typically used in these embodiments as it is considered to provide suitable strength and rigidity to secure the tubular section to the valve body (301) whilst also providing a relatively compact size compared to if for instance a bracket (314) formed from a polymeric material were to be used for the same purpose. Although the tubular section (306) is secured to the valve body (301) by the bracket (314) that is screwed to the valve body (301), it is conceivable that other suitable securement mechanisms may be utilised instead as an alternative to screw-threaded engagement.

Advantageously, as both the valve body (301) and the valve orifice member (305) in the above-described embodiments of the present invention are not formed by machining forged brass having an unacceptable lead content but are instead formed from polymeric materials, such valves (300) may be suitable for use in application where the valve part may contact with foods/liquids for human consumption. For instance, such valves may be suitable for use in coffee machines, water dispenser appliances and the like. However, whilst in this embodiment, both the valve body (301) and the valve orifice member (305) are formed from polymeric materials, it may be acceptable to the valve body (301) and/or valve orifice member (305) from a forged brass material or other material in certain circumstances where the choice of material will not unduly impact upon the valve's fitness for use for the specific application. Furthermore, as both the valve body (301) and the valve orifice member (305) are not formed by machining forged brass but are instead formed from polymeric materials, the manufacturing complexity, time and labour is alleviated as such parts may be formed relatively easily and quickly by injection molding the parts.

Advantageously, as the valve orifice member (305) and the valve body (301) are not formed with screw-threads to effect securement to each other, this simplifies the injection molding design and manufacturing process. Also, as the valve body and valve orifice member are not screwed together, but are instead secured together by pressure of the tubular section urging the valve orifice member against the valve body, such securement is more accurate and reliable.

The above described embodiments may be modified such that they function as a multiple-valve devices as shown in Figs. 5-7. For simplicity, the same reference numerals used above in the single-valve device will be used to describe similar parts in this multiple-valve device embodiment. The multiple-valve device embodiment, includes a single valve body (301) that is injection molded from a polymeric material and which has multiple inlets, at least one corresponding outlet (303), and multiple corresponding fluid passages connection the inlets and outlets. Although in this embodiment there is just one outlet (303) shown, there may be multiple outlets (303) in other examples. A plurality of different valve orifice members (305) are each formed separately from the valve body (301) by way of injection molded polymeric materials and then inserted in to recesses (301a) in the valve body (301) so as to form portions of each of the fluid passages in a similar manner as described above. Multiple tubular sections (306) as described above are then fitted to the valve body (301) and secured to the valve body (301) by brackets (314) which results in compression securement of the valve orifice members (305) within the valve body (301). Advantageously, as the multiple valve orifice members (305) of each valve element of the device are formed separately from the valve body (301) before being assembled to the valve body (301) according to the above-described process, this alleviates the occurrence of defects and rejection of the valve body (301) that is experienced in existing manufacturing processes in which polymeric valve bodies of existing multiple-valve devices are integrally formed as a single piece together with each of the valve orifice members.

The above described embodiments may be modified such that it functions as a multiple-valve device having a single valve body that is injection molded from a polymeric material and which has multiple inlets, multiple corresponding outlets, and multiple corresponding fluid passages connection the inlets and outlets. A plurality of different valve orifice members are each formed separately from the valve body by way of injection molded polymeric materials and then inserted in to recesses (301a) in the valve body so as to form portions of each of the fluid passages in a similar manner as described above. Multiple tubular sections as described above are then fitted to the valve body and secured to the valve body by brackets which results in compression securement of the valve orifice members within the valve body. As the multiple valve orifice members are formed separately and are detachable from the valve body in this embodiment, this alleviates the even greater potential for wastage experienced when manufacturing existing single-piece multiple-valve devices.

Although the preferred embodiments described above utilise a solenoid actuation mechanism to effect movement of the plunger within the tubular section, it is conceivable that in alternate embodiments, other actuation mechanisms may be utilised such as a pneumatic or hydraulic actuation mechanism by way of example.

It is noted that, when a component is described to be "fixed", "coupled", "attached", "engaged", "connected" or the like to another component, it may be directly fixed to the another component or there may be an intermediate component unless expressly or implicitly stated to the contrary. When a component is described to be "disposed" on or in another component, it can be directly disposed on or in the another component or there may be an intermediate component unless expressly or implicitly stated to the contrary.

Unless otherwise specified, all technical and scientific terms have the ordinary meaning as commonly understood by persons skilled in the art. The terms used in this disclosure are illustrative rather than limiting. The term "and/or" used in this disclosure means that each and every combination of one or more associated items listed are included.

Those skilled in the art will appreciate that the invention described herein is susceptible to variations and modifications other than those specifically described without departing from the scope of the invention. All such variations and modification which become apparent to persons skilled in the art, should be considered to fall within the scope of the invention as defined by the appended claims.

The reference to any prior art in this specification is not, and should not be taken as, an acknowledgment or any form of suggestion that that prior art forms part of the common general knowledge.

## Claims

1. A valve (300) for use with a fluid pump, the valve (300) including:
a valve body (301) having an inlet (302) and an outlet (303), said inlet (302) being configured for fluid communication with the outlet (303) via a fluid passage (304) disposed between the inlet (302) and the outlet (303);
a valve orifice member (305) disposed within the valve body (301) and forming a portion of the fluid passage (304) disposed between the inlet (302) and the outlet (303);
a tubular section (306) having a first end configured for rigid attachment to the valve body (301);
a plunger (307) configured for controlled movement within the tubular section (306) in response to at least one control signal received from a control module between at least one of a first position wherein a mating surface (307a) of the plunger (307) is configured to sealingly engage with an orifice of the valve orifice member (305) so as to block flow of fluid from the inlet (302) to the outlet (303) via the fluid passage (304), and a second position wherein the mating surface (307a) of the plunger (307) is configured to not sealingly engage with the orifice of the valve orifice member (305) so as to not block fluid flow from the inlet (302) to the outlet (303) via the fluid passage (304); and
wherein said valve orifice member (305) is separately formed from the valve body (301) and configured to be inserted within the valve body (301), and,
wherein an inner spring (307c) is configured for compression and expansion movement along a hollow elongate core of the plunger (307), an inner tube (307b) within the elongate hollow core of the plunger (307) providing support and guidance for the inner spring (307c) as it expands and compresses and wherein the mating surface (307a) of the plunger (307) is rigidly mounted on the end of the inner spring (307c) so that when the mating surface (307a) sealing engages with the valve orifice member (305), the inner spring (307c) assists in dampening the shock of impact upon closure of the mating surface (307a) against the valve orifice member (305),
**characterised in that** the first end of the tubular section (306) is configured to press against the valve orifice member (305) within the valve body (301) so as to secure the valve orifice member (305) in place within the valve body (305) when the tubular section (306) is rigidly attached to the valve body.

2. A valve as claimed in claim 1 wherein at least one of the valve orifice member (305) and the valve body (301) include a molded polymeric material.

3. A valve as claimed in any one of the preceding claims wherein at least one of the valve orifice member (305) and the valve body (301) are formed from an injection molded polymeric material.

4. A valve as claimed in claim 2 or claim 3 wherein the polymeric material includes at least one of polyphthalamide (PPA), Polyphenylene Sulfide (PPS) and a Nylon^{™} type material.

5. A valve as claimed in any one of the preceding claims wherein the tubular section (306) is rigidly attached to the valve body (301) by a bracket (314) configured for surrounding a periphery of the tubular section (306) and being secured to an outer surface of the valve body (301), and wherein, the bracket (314) is shaped to prevent detachment of the tubular section (306) from the valve body (301) when the bracket (314) is secured to the outer surface of the valve body (301).

6. A valve as claimed in claim 5 wherein the bracket (314) is configured to be secured to the outer surface of the valve body (301) by screwing the bracket (314) to the outer surface of the valve body (301).

7. A valve as claimed in any one of the preceding claims wherein an o-ring is disposed between the valve orifice member (305) and the first end of the tubular section (306), and, a second o-ring is disposed between the valve orifice member (305) and the valve body (301).

8. A valve as claimed in any one of the preceding claims wherein the plunger includes an armature of a solenoid actuator that is configured for movement relative to a solenoid coil (308) within the tubular section (306) between the first and second positions in response to the solenoid coil (308) being energised by at least one control signal received from the control module.

9. A valve as claimed in any one of the preceding claims including a biasing element configured for biasing the plunger (307) in to at least one of the first and the second positions

10. A valve for use with a fluid pump, the valve including:
a valve body (301) having a plurality of inlets (302) and at least one outlet (303), said plurality of inlets (302) being configured for fluid communication with the corresponding at least one outlets (303) via respective fluid passages disposed between the inlets (302) and the at least one corresponding outlet (303);
a plurality of valve orifice members (305) disposed within the valve body (301) and forming portions of the respective fluid passages disposed between the inlets (302) and the at least one corresponding outlet (303);
a plurality of tubular sections (306) having first ends configured for rigid attachment to the valve body (301);
a plurality of plungers (307) configured for controlled movement within the respective tubular sections in response to at least one control signal received from a control module between at least one of a first position wherein mating surfaces of the plungers are configured to sealingly engage with orifices of the respective valve orifice members (305) so as to block flow of fluid from the inlets (302) to the respective at least one outlet (303) via the respective fluid passages, and a second position wherein the mating surfaces of the plungers are configured to not sealingly engage with the orifices of the respective valve orifice members (305) so as to not block fluid flow from the inlets (302) to the at least one respective outlet (303) via the respective fluid passages; and
wherein said valve orifice members (305) are separately formed from the valve body (301) and configured to be inserted within the valve body (301), **characterised in that** the first ends of the tubular sections are configured to press against the respective valve orifice members (305) within the valve body so as to secure the respective valve orifice members (305) in place within the valve body (301) when the respective tubular sections are rigidly attached to the valve body (301); and **in that** an inner spring (307c) is configured for compression and expansion movement along a hollow elongate core of each plunger (307), an inner tube (307b) within the elongate hollow core of each plunger (307) providing support and guidance for the inner spring (307c) as it expands and compresses and wherein the mating surface (307a) of each plunger (307) is rigidly mounted on the end of the inner spring (307c) so that when the mating surface (307a) sealing engages with the respective valve orifice member (305), the inner spring (307c) assists in dampening the shock of impact upon closure of the mating surface (307a) against the respective valve orifice member (305)

11. A valve as claimed in claim 10 wherein the valve body (301) of the fluid valve includes an integrally formed valve body (301).

12. A valve as claimed in claim 11 wherein the integrally formed valve body includes a single-piece injection molded body (301).

13. A valve as claimed in any one of claims 10 to 12 wherein the valve body (301) is comprised by a plurality of separately molded valve bodies.

## Patentansprüche

1. Ventil (300) zur Verwendung mit einer Fluidpumpe, wobei das Ventil (300) Folgendes beinhaltet:
einen Ventilkörper (301), der einen Einlass (302) und einen Auslass (303) aufweist, wobei der Einlass (302) zur Fluidverbindung mit dem Auslass (303) über einen Fluiddurchgang (304) konfiguriert ist, der zwischen dem Einlass (302) und dem Auslass (303) angeordnet ist;
ein Ventilöffnungselement (305), das innerhalb des Ventilkörpers (301) angeordnet ist und einen Teil des Fluiddurchgangs (304) bildet, der zwischen dem Einlass (302) und dem Auslass (303) angeordnet ist;
einen rohrförmigen Abschnitt (306), der ein erstes Ende aufweist, das zum starren Anbringen an dem Ventilkörper (301) konfiguriert ist;
einen Stößel (307), der zur gesteuerten Bewegung innerhalb des rohrförmigen Abschnitts (306) als Reaktion auf mindestens ein Steuersignal, das von einem Steuermodul empfangen wird zwischen mindestens einer einer ersten Position, konfiguriert ist, wobei eine Passfläche (307a) des Stößels (307) konfiguriert ist, um abdichtend in eine Öffnung des Ventilöffnungselements (305) einzugreifen, um Fluidfluss von dem Einlass (302) zu dem Auslass (303) über den Fluiddurchgang (304) zu blockieren, und einer zweiten Position, in der die Passfläche (307a) des Stößels (307) konfiguriert ist, um nicht abdichtend in die Öffnung des Ventilöffnungselements (305) einzugreifen, um Fluidfluss von dem Einlass (302) zu dem Auslass (303) über den Fluiddurchgang nicht zu blockieren (304); und
wobei die Ventilöffnungselemente (305) separat von den Ventilkörper (301) gebildet und konfiguriert sind, um in den Ventilkörper (301) eingesetzt zu werden, **dadurch gekennzeichnet, dass**
eine innere Feder (307c) für eine Kompressions- und Expansionsbewegung entlang eines hohlen länglichen Kerns des Stößels (307) konfiguriert ist, wobei ein inneres Rohr (307b) innerhalb des länglichen hohlen Kerns des Stößels (307) Tragen und Führung für die innere Feder (307c) bereitstellt, während sie sich ausdehnt und zusammenzieht, und wobei die Passfläche (307a) des Stößels (307) starr an dem Ende der inneren Feder (307c) derart montiert ist, dass, wenn die Passfläche (307a) abdichtend mit dem Ventilöffnungselement (305) eingreift, die innere Feder (307c) beim Dämpfen des Aufprallstoßes beim Schließen der Passfläche (307a) gegen das Ventilöffnungselement (305) hilft, **dadurch gekennzeichnet, dass** das erste Ende des rohrförmigen Abschnitts (306) konfiguriert, um gegen das Ventilöffnungselement (305) in dem Ventilkörper (301) zu drücken, um das Ventilöffnungselement (305) an seinem Platz innerhalb des Ventilkörpers (305) zu sichern, wenn der rohrförmige Abschnitt (306) starr an dem Ventilkörper angebracht ist.

2. Ventil nach Anspruch 1, wobei mindestens eines des Ventilöffnungselements (305) und/oder des Ventilkörpers (301) ein geformtes Polymermaterial beinhaltet.

3. Ventil nach einem der vorstehenden Ansprüche, wobei das Ventilöffnungselement (305) und/oder der Ventilkörper (301) aus einem spritzgegossenen Polymermaterial geformt sind.

4. Ventil nach Anspruch 2 oder Anspruch 3, wobei das Polymermaterial mindestens eines von Polyphthalamid (PPA), Polyphenylensulfid (PPS) und einem Material vom Typ Nylon^{™} beinhaltet.

5. Ventil nach einem der vorstehenden Ansprüche, wobei der rohrförmige Abschnitt (306) starr an dem Ventilkörper (301) durch eine Halterung (314) angebracht ist, die konfiguriert ist, um einen Umfang des rohrförmigen Abschnitts (306) zu umgeben und an einer Außenoberfläche des Ventilkörpers (301) gesichert zu sein, und wobei die Halterung (314) gestaltet ist, um ein Ablösen des rohrförmigen Abschnitts (306) von dem Ventilkörper (301) zu verhindern, wenn die Halterung (314) an der Außenfläche des Ventilkörpers (301) befestigt ist.

6. Ventil nach Anspruch 5, wobei die Halterung (314) konfiguriert ist, um an der Außenfläche des Ventilkörpers (301) gesichert zu werden, indem die Halterung (314) an die Außenfläche des Ventilkörpers (301) geschraubt wird.

7. Ventil nach einem der vorstehenden Ansprüche, wobei ein O-Ring zwischen dem Ventilöffnungselement (305) und dem ersten Ende des rohrförmigen Abschnitts (306) angeordnet ist, und ein zweiter O-Ring zwischen dem Ventilöffnungselement (305) und dem Ventilkörper (301) angeordnet ist.

8. Ventil nach einem der vorstehenden Ansprüche, wobei der Stößel einen Anker eines Magnetbetätigers umfasst, der für eine Bewegung relativ zu einer Magnetspule (308) innerhalb des rohrförmigen Abschnitts (306) zwischen der ersten und der zweiten Position als Reaktion darauf konfiguriert ist, dass die Magnetspule (308) von mindestens einem Steuersignal, das von dem Steuermodul empfangen wird, angeregt wird.

9. Ventil nach einem der vorstehenden Ansprüche, das ein Vorspannelement beinhaltet, das konfiguriert ist, um den Stößel (307) in mindestens eine der ersten und der zweiten Position vorzuspannen.

10. Ventil zur Verwendung mit einer Fluidpumpe, wobei das Ventil Folgendes beinhaltet:
einen Ventilkörper (301) mit einer Vielzahl von Einlässen (302) und mindestens einem Auslass (303), wobei die Vielzahl von Einlässen (302) zur Fluidverbindung mit dem entsprechenden mindestens einen von Auslässen (303) über entsprechende Fluiddurchgänge, die zwischen den Einlässen (302) und dem mindestens einen entsprechenden Auslass (303) angeordnet sind, konfiguriert ist;
eine Vielzahl von Ventilöffnungselementen (305), die innerhalb des Ventilkörpers (301) angeordnet ist und Abschnitte der jeweiligen Fluiddurchgänge bilden, die zwischen den Einlässen (302) und dem mindestens einen entsprechenden Auslass (303) angeordnet sind;
eine Vielzahl rohrförmiger Abschnitte (306), die ein erstes Ende aufweist, das zum starren Anbringen an dem Ventilkörper (301) konfiguriert ist;
eine Vielzahl von Stößeln (307), die zur gesteuerten Bewegung innerhalb der jeweiligen rohrförmigen Abschnitte als Reaktion auf mindestens ein Steuersignal, das von einem Steuermodul zwischen mindestens einer einer ersten Position empfangen wird, konfiguriert ist, wobei Passflächen der Stößel konfiguriert sind, um abdichtend mit Öffnungen der jeweiligen Ventilöffnungselemente (305) einzugreifen, um Fluidfluss von den Einlässen (302) zu dem jeweiligen mindestens einen Auslass (303) über die jeweiligen Fluiddurchgänge zu blockieren, und einer zweiten Position, in der die Passflächen der Stößel konfiguriert sind, um nicht abdichtend mit den Öffnungen der jeweiligen Ventilöffnungselemente (305) einzugreifen, um Fluidfluss von den Einlässen (302) zu dem mindestens einen jeweiligen Auslass (303) über die jeweiligen Fluiddurchgänge nicht zu blockieren; und
wobei die Ventilöffnungselemente (305) separat von den Ventilkörper (301) gebildet und konfiguriert sind, um in den Ventilkörper (301) eingesetzt zu werden, **dadurch gekennzeichnet, dass**
die ersten Enden der rohrförmigen
Abschnitte konfiguriert sind, um gegen die jeweiligen Ventilöffnungselemente (305) in dem Ventilkörper zu drücken, um die jeweiligen Ventilöffnungselemente (305) in dem Ventilkörper (301) an ihrem Platz zu sichern, wenn die jeweiligen rohrförmigen Abschnitte starr an dem Ventilkörper (301) angebracht sind; und
dass eine innere Feder (307c) für eine Kompressions- und Expansionsbewegung entlang eines hohlen länglichen Kerns jedes Stößels (307) konfiguriert ist, wobei ein Innenrohr (307b) innerhalb des länglichen hohlen Kerns jedes Stößels (307) Tragen und Führung für die innere Feder (307c) bereitstellt, während sie sich ausdehnt und zusammenzieht, und wobei die Passfläche (307a) jedes Stößels (307) starr an dem Ende der inneren Feder (307c) derart montiert ist, dass, wenn die Passfläche (307a) abdichtend mit dem jeweiligen Ventilöffnungselement (305) eingreift, die innere Feder (307c) beim Dämpfen des Aufprallstoßes beim Schließen der Passfläche (307a) gegen das jeweilige Ventilöffnungselement (305) hilft.

11. Ventil nach Anspruch 10, wobei der Ventilkörper (301) des Fluidventils einen integral geformten Ventilkörper (301) beinhaltet.

12. Ventil nach Anspruch 11, wobei der integral geformte Ventilkörper einen einstückigen Spritzgusskörper (301) beinhaltet.

13. Ventil nach einem der Ansprüche 10 bis 12, wobei der Ventilkörper (301) aus einer Vielzahl separat geformter Ventilkörper besteht.

## Revendications

1. Soupape (300) destinée à être utilisée avec une pompe à fluide, la soupape (300) comportant :
un corps de soupape (301) ayant une entrée (302) et une sortie (303), ladite entrée (302) étant conçue pour être en communication fluidique avec la sortie (303) par l'intermédiaire d'un passage de fluide (304) disposé entre l'entrée (302) et la sortie (303) ;
un élément à orifice de soupape (305) disposé à l'intérieur du corps de soupape (301) et formant une partie du passage de fluide (304) disposé entre l'entrée (302) et la sortie (303) ;
une section tubulaire (306) ayant une première extrémité conçue pour être fixée de manière rigide au corps de soupape (301) ;
un piston (307) conçu pour effectuer un mouvement commandé à l'intérieur de la section tubulaire (306) en réponse à au moins un signal de commande reçu provenant d'un module de commande entre au moins l'une parmi une première position dans laquelle une surface d'accouplement (307a) du piston (307) est conçue pour venir en prise de manière étanche avec un orifice de l'élément à orifice de soupape (305) de manière à bloquer l'écoulement de fluide de l'entrée (302) à la sortie (303) par l'intermédiaire du passage de fluide (304), et une seconde position dans laquelle la surface d'accouplement (307a) du piston (307) est conçue pour ne pas venir en prise de manière étanche avec l'orifice de l'élément à orifice de soupape (305) afin de ne pas bloquer l'écoulement de fluide de l'entrée (302) à la sortie (303) par l'intermédiaire du passage de fluide (304) ; et
dans laquelle ledit élément à orifice de soupape (305) est formé séparément du corps de soupape (301) et conçu pour être inséré à l'intérieur du corps de soupape (301), et,
dans laquelle un ressort interne (307c) est conçu pour effectuer un mouvement de compression et de dilatation le long d'un noyau allongé creux du piston (307), un tube interne (307b) à l'intérieur du noyau creux allongé du piston (307) fournissant un support et un guidage pour le ressort interne (307c) lorsqu'il se dilate et se comprime et dans laquelle la surface d'accouplement (307a) du piston (307) est montée de manière rigide sur l'extrémité du ressort interne (307c) de sorte que, lorsque la surface d'accouplement (307a) vient en prise de manière étanche avec l'élément à orifice de soupape (305), le ressort interne (307c) aide à amortir le choc d'impact lors de la fermeture de la surface d'accouplement (307a) contre l'élément à orifice de soupape (305), **caractérisée en ce que** la première extrémité de la section tubulaire (306) est conçue pour appuyer contre l'élément d'orifice de soupape (305) à l'intérieur du corps de soupape (301) de manière à fixer l'élément à orifice de soupape (305) en place à l'intérieur du corps de soupape (305) lorsque la section tubulaire (306) est fixée de manière rigide au corps de soupape.

2. Soupape selon la revendication 1, dans laquelle au moins l'un parmi l'élément à orifice de soupape (305) et le corps de soupape (301) comporte un matériau polymère moulé.

3. Soupape selon l'une quelconque des revendications précédentes, dans laquelle au moins l'un parmi l'élément à orifice de soupape (305) et le corps de soupape (301) est formé à partir d'un matériau polymère moulé par injection.

4. Soupape selon la revendication 2 ou la revendication 3, dans laquelle le matériau polymère comporte au moins l'un parmi le polyphtalamide (PPA), le sulfure de polyphénylène (PPS) et un matériau de type Nylon^{™}.

5. Soupape selon l'une quelconque des revendications précédentes, dans laquelle la section tubulaire (306) est fixée de manière rigide au corps de soupape (301) par un support (314) conçu pour entourer une périphérie de la section tubulaire (306) et étant fixé à une surface externe du corps de soupape (301), et dans laquelle le support (314) est conformé pour empêcher le détachement de la section tubulaire (306) du corps de soupape (301) lorsque le support (314) est fixé à la surface externe du corps de soupape (301).

6. Soupape selon la revendication 5, dans laquelle le support (314) est conçu pour être fixé à la surface externe du corps de soupape (301) en vissant le support (314) à la surface externe du corps de soupape (301).

7. Soupape selon l'une quelconque des revendications précédentes, dans laquelle un joint torique est disposé entre l'élément à orifice de soupape (305) et la première extrémité de la section tubulaire (306), et un second joint torique est disposé entre l'élément à orifice de soupape (305) et le corps de soupape (301).

8. Soupape selon l'une quelconque des revendications précédentes, dans laquelle le piston comporte une armature d'un actionneur à solénoïde qui est conçue pour se déplacer par rapport à une bobine de solénoïde (308) à l'intérieur de la section tubulaire (306) entre les première et seconde positions en réponse à l'énergisation de la bobine de solénoïde (308) par au moins un signal de commande reçu du module de commande.

9. Soupape selon l'une quelconque des revendications précédentes comportant un élément de sollicitation conçu pour solliciter le piston (307) vers au moins l'une des première et seconde positions.

10. Soupape destinée à être utilisée avec une pompe à fluide, la soupape comportant :
un corps de soupape (301) ayant une pluralité d'entrées (302) et au moins une sortie (303), ladite pluralité d'entrées (302) étant conçues pour être en communication fluidique avec l'au moins une sortie (303) correspondante par l'intermédiaire de passages de fluide respectifs disposés entre les entrées (302) et l'au moins une sortie (303) correspondante ;
une pluralité d'éléments à orifice de soupape (305) disposés à l'intérieur du corps de soupape (301) et formant des parties des passages de fluide respectifs disposés entre les entrées (302) et l'au moins une sortie (303) correspondante ;
une pluralité de sections tubulaires (306) ayant des premières extrémités conçues pour être fixées de manière rigide au corps de soupape (301) ;
une pluralité de pistons (307) conçus pour effectuer un mouvement commandé à l'intérieur des sections tubulaires respectives en réponse à au moins un signal de commande reçu provenant d'un module de commande entre au moins l'une parmi une première position dans laquelle les surfaces d'accouplement des pistons sont conçues pour venir en prise de manière étanche avec des orifices des éléments à orifice de soupape (305) respectifs de manière à bloquer l'écoulement de fluide des entrées (302) vers l'au moins une sortie (303) respective par l'intermédiaire des passages de fluide respectifs, et une seconde position dans laquelle les surfaces d'accouplement des pistons sont conçues pour ne pas venir en prise de manière étanche avec les orifices des éléments à orifice de soupape (305) respectifs afin de ne pas bloquer l'écoulement de fluide des entrées (302) vers l'au moins une sortie (303) respective par l'intermédiaire des passages de fluide respectifs ; et
dans laquelle lesdits éléments à orifice de soupape (305) sont formés séparément du corps de soupape (301) et conçus pour être insérés à l'intérieur du corps de soupape (301),
**caractérisée en ce que**
les premières extrémités des sections tubulaires sont conçues pour appuyer contre les éléments à orifice de soupape (305) respectifs à l'intérieur du corps de soupape de manière à fixer les éléments à orifice de soupape (305) respectifs en place à l'intérieur du corps de soupape (301) lorsque les sections tubulaires respectives sont fixées de manière rigide au corps de soupape (301) ; et
**en ce qu'**un ressort interne (307c) est conçu pour effectuer un mouvement de compression et de dilatation le long d'un noyau allongé creux de chaque piston (307), un tube interne (307b) à l'intérieur du noyau creux allongé de chaque piston (307) fournissant un support et un guidage pour le ressort interne (307c) lorsqu'il se dilate et se comprime et dans laquelle la surface d'accouplement (307a) de chaque piston (307) est montée de manière rigide sur l'extrémité du ressort interne (307c) de sorte que lorsque la surface d'accouplement (307a) vient en prise de manière étanche avec l'élément à orifice de soupape (305) respectif, le ressort interne (307c) aide à amortir le choc d'impact lors de la fermeture de la surface d'accouplement (307a) contre l'élément à orifice de soupape (305) respectif.

11. Soupape selon la revendication 10, dans laquelle le corps de soupape (301) de la soupape à fluide comporte un corps de soupape formé d'un seul tenant (301).

12. Soupape selon la revendication 11, dans laquelle le corps de soupape formé d'un seul tenant comporte un corps moulé par injection en une seule pièce (301).

13. Soupape selon l'une quelconque des revendications 10 à 12, dans laquelle le corps de soupape (301) est composé d'une pluralité de corps de soupape moulés séparément.
